Europäisches Patentamt

(19) European Patent Office

Office européen des brevets

(11) Numéro de publication: **0 167 448**

**B1**

(12) **FASCICULE DE BREVET EUROPÉEN**

(45) Date de publication du fascicule du brevet:
23.11.88

(21) Numéro de dépôt: 85401284.6

(22) Date de dépôt: 25.06.85

(51) Int. Cl.⁴: **F 16 L 55/10**, B 65 D 59/00,
B 01 J 3/03

┌─────────────────┐
│ E R R A T U M │
└─────────────────┘

(SEITE, SPALTE, ZEILE)
(PAGE, COLUMN, LINE)
(PAGE, COLONNE, LIGNE)

| DIE TEXTSTELLE : TEXT PUBLISHED : LE PASSAGE SUIVANT : | | | | LAUTET BERICHTIGT: SHOULD READ : DEVRAIT ETRE LU : |
|---|---|---|---|---|
| pratiquées dans la plaque (2) pour pincer plus efficacement la membrane (8). | 4 | 5/6 5/6 | 64/65 1 | pratiquées dans l'élément d'obturation (2) pour pincer plus efficacement la membrane (8). |
| un rebord (10b) | 4 | 6 | 4 | un rebord (10a) |

| Tag der Entscheidung über die Berichtigung | ) ) | | |
|---|---|---|---|
| Date of decision on rectification: | ) | 12.12.88 | |
| Date de décision portant sur modification: | ) ) | | |

| Ausgabe- und Veröffentlichungstag: | ) ) | |
|---|---|---|
| Issue and publication date: | ) | 22.02.89 |
| Date d'edition et de publication: | ) ) | |

Patbl.Nr)

EPB no:) 89/08.

Bull. no:)

Europäisches Patentamt

(19) European Patent Office

Office européen des brevets

(11) Numéro de publication: **0 167 448**
**B1**

(12) **FASCICULE DE BREVET EUROPÉEN**

(45) Date de publication du fascicule du brevet:
23.11.88

(51) Int. Cl.⁴: **F 16 L 55/10,** B 65 D 59/00,
B 01 J 3/03

(21) Numéro de dépôt: 85401284.6

(22) Date de dépôt: 25.06.85

(54) Dispositif d'obturation d'une ouverture et vanne-tiroir comportant un tel dispositif.

(30) Priorité: 26.06.84 FR 8410031

(43) Date de publication de la demande:
08.01.86 Bulletin 86/2

(45) Mention de la délivrance du brevet:
23.11.88 Bulletin 88/47

(84) Etats contractants désignés:
BE DE GB IT NL SE

(56) Documents cité:
DE-A-1 815 040
DE-C-182 814
FR-A-626 702
FR-A-1 266 673
FR-A-2 259 026
GB-A-987 994
GB-A-1 155 171
US-A-3 019 819
US-A-4 031 914

(73) Titulaire: **ELECTRICITE DE FRANCE Service
National, 2, rue Louis Murat, F-75008 Paris (FR)**

(72) Inventeur: **Dolhen, Gérard, 26, rue du Château
d'Eau Ecuelles, F-77250 Moret sur Loing (FR)**
Inventeur: **Oberlin, Claude, 24, Avenue du Général
de Gaulle, F-77210 Avon (FR)**
Inventeur: **Lemarquis, Jean- Claude, 29, rue de la
République, F-77250 Moret sur Loing (FR)**
Inventeur: **Bandura, Daniel, 37, rue de la Fontaine,
F-77240 Cesson (FR)**

(74) Mandataire: **Martin, Jean- Jacques, Cabinet
REGIMBEAU 26, Avenue Kléber, F-75116 Paris (FR)**

## Description

Dans de nombreux domaines techniques, Il est fréquent d'avoir à obturer une ouverture de manière étanche à un fluide, notamment une ouverture pratiquée sur une conduite de fluide. De manière générale, comme décrit par exemple dans le brevet US-A-4 031 914, on utilise un élément d'obturation de dimensions au moins égales à celles de l'ouverture à obturer et maintenu contre celle-ci. Un joint d'étanchéité intercalé entre les bords de l'ouverture et l'élément d'obturation assure l'étanchéité recherchée. La présence du joint d'étanchéité permet d'absorber dans une certaine mesure les inégalités de surface et les déformations tant du bord de l'ouverture que de l'élément d'obturation. Il est toutefois nécessaire que celles-ci ne dépassent pas certaines limites sans quoi des défauts d'étanchéité apparaissent. Il est donc indispensable que l'élément d'obturation et les bords de l'ouverture à obturer soient usinés avec une certaine précision. Le coût de réalisation est donc relativement élevé. En outre, il est également nécessaire que les dimensions de l'ouverture à obturer soient relativement précises.

La présente invention remédie à ces inconvénients, et propose à cet effet un dispositif d'obturation de conception et de mise en oeuvre simples, qui peut s'adapter sur des orifices de dimensions différentes, et d'un prix de revient peu élevé.

Plus précisément, l'invention concerne un dispositif d'obturation d'une ouverture limitée par un bord comprenant un élément d'obturation rigide dont les dimensions sont supérieures à celles de l'ouverture et dont le pourtour épouse au moins approximativement le bord de l'ouverture, des moyens pour assujettir ledit élément d'obturation en regard de l'ouverture, et des moyens pour assurer une étanchéité à un fluide entre l'élément d'obturation et le bord.

Conformément à l'invention, les moyens pour assurer une étanchéité à un fluide entre l'élément d'obturation et le bord de l'ouverture à obturer sont constitués par une membrane souple dont les dimensions sont également supérieures à celles de l'ouverture, par des moyens pour fixer le pourtour de cette membrane de manière étanche sur l'élément d'obturation de manière à délimiter un volume entre la membrane et l'élément d'obturation et par un trou de communication pratiqué dans l'élément d'obturation pour mettre ledit volume en communication avec une source de fluide sous pression.

L'invention concerne également un dispositif d'obturation tel que défini dans les revendications 3 à 7.

L'invention présente de nombreux avantages. Elle est d'une conception simple, donc d'un prix de revient peu élevé. Elle peut s'adapter sur des orifices de dimensions différentes. Elle est simple dans sa mise en oeuvre. Elle ne nécessite pas que l'orifice à obturer présente des dimensions très précises. Elle ne nécessite donc pas d'usinage de grande qualité. Elle peut être utilisée très facilement sur un chantier.

L'invention est exposée ci-après plus en détail à l'aide de dessins annexés représentant plusieurs modes d'exécution donnés à titre d'exemples. Sur les dessins annexés:

- les figures 1 et 2 représentent un dispositif d'obturation conforme à l'invention, dans lequel l'élément d'obturation est une plaque comportant une membrane unique;
- la figure 3 représente un collier de serrage permettant de fixer une plaque telle que celle des figures 1 et 2 à l'extrémité d'une canalisation ne comportant pas de bride de fixation;
- les figures 4 et 5 représentent deux variantes d'exécution des moyens pour fixer une membrane sur un élément d'obturation;
- les figures 6 et 7 représentent deux applications d'un dispositif d'obturation conforme à l'invention et comportant deux éléments d'obturation adaptés à deux ouvertures situées en regard l'une de l'autre;
- la figure 8 représente une vanne à tiroir comportant un dispositif d'obturation selon l'invention.

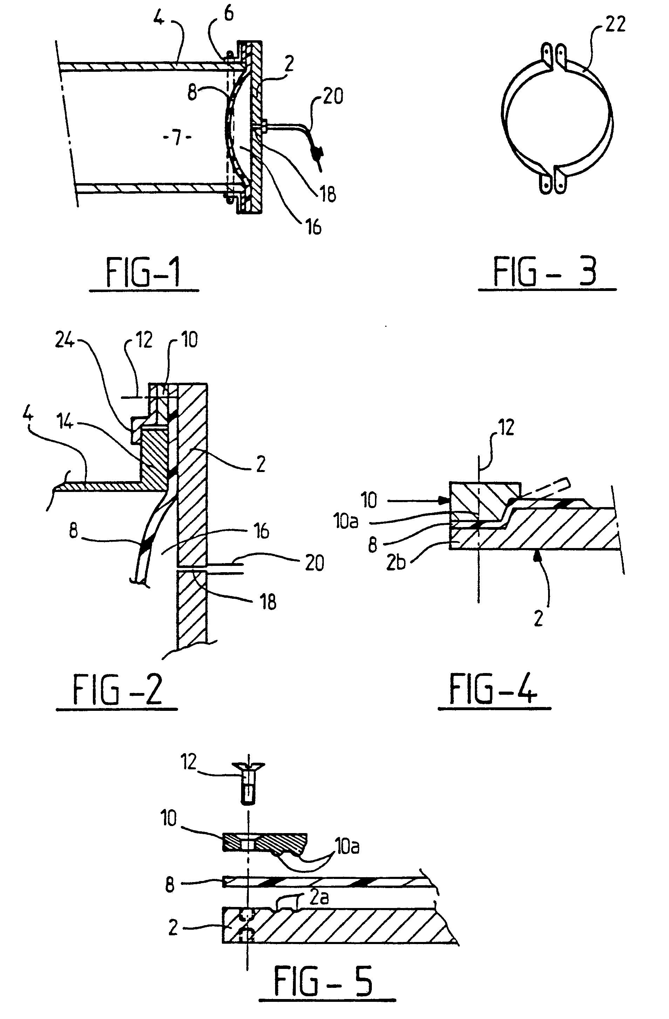

Dans le mode de réalisation décrit en référence aux figures 1 à 5, le dispositif d'obturation comporte un élément d'obturation unique auquel est associée une membrane unique. Sur la figure 1, l'élément d'obturation est constitué par une plaque métallique 2 rigide, de forme circulaire. Cette plaque est disposée en regard d'une extrémité ouverte d'une canalisation 4, destinée à véhiculer un fluide, par exemple un liquide tel que de l'eau, un produit chimique, un dérivé pétrolier ou un gaz. Le bord 6 de la canalisation 4 délimite l'ouverture 7 que l'on désire obturer. Dans l'exemple décrit, cette ouverture est circulaire mais sa forme pourrait être différente, par exemple rectangulaire ou carrée.

Une membrane 8 réalisée en une matière souple telle qu'un élastomère est fixée par son pourtour à la plaque 2. Il est évident que la nature de l'élastomère doit être compatible avec celle du fluide à étancher. L'épaisseur de la membrane est fonction de la pression d'obturation. La membrane est fixée au moyen d'une couronne 10. Elle est pincée entre la plaque 2 et la couronne qui est serrée par des vis 12.

Les figures 4 et 5 représentent deux variantes de réalisation de la couronne. Sur la figure 5, la couronne comporte deux nervures 10a concentriques qui pénètrent dans des rainures annulaires correspondantes 2a pratiquées dans la plaque 2 lorsque la couronne est mise en place. Les nervures 10a et les rainures 2a ont pour fonction de pincer plus efficacement la membrane. Sur la figure 4, la plaque 2 présente un décrochement 2b qui coopère avec un rebord annulaire 10a de la couronne. La fonction du décrochement et du rebord annulaire est la même que celle des nervures et des gorges de la figure 5, à savoir pincer plus efficacement la membrane.

La membrane et la plaque 2 délimitent un volume 16. Un trou de communication 18 permet de mettre en communication le volume 16 avec une source de fluide sous pression (non représentée) par l'intermédiaire d'une canalisation 20. Le fluide sous pression peut être un gaz ou un liquide.

Des moyens mécaniques permettent de fixer la plaque 2 en regard de l'extrémité de la canalisation 4. La plaque peut être fixée de telle manière que la membrane soit en contact direct avec le bord 6. Elle peut également être fixée de telle manière qu'il existe un jeu entre le bord 6 et la surface de la membrane 8. C'est précisément l'un des avantages du dispositif d'obturation de l'invention de pouvoir absorber un tel jeu.

Dans le mode de réalisation de la figure 1, la canalisation ne comporte pas par elle-même de bride de fixation pré-existante. C'est pourquoi, on a prévu des moyens de fixation rapportés constitués par un collier de serrage 22 représenté sur la figure 3 et constitué de deux demi-colliers assemblés au moyen de boulons. Ce collier est serré à l'extrémité de la canalisation 4 afin de jouer le rôle d'une bride de fixation. En revanche, la canalisation 4 représentée sur la vue de détail de la figure 2 comporte une bride de fixation pré-existante 14. Un collier rapporté tel que 22 n'est donc pas nécessaire. Des pattes de fixation 24 présentant un profil en gradins, par exemple au nombre de quatre, ont pour fonction de fixer l'ensemble constitué par la plaque 2, la membrane 8 et la couronne 10 sur le collier de serrage 22 (mode de réalisation de la figure 1) ou sur la bride 14 (mode de réalisation de la figure 2). On remarque que les vis 12 servent à la fois à serrer la couronne 10 sur la plaque 2 et à assujettir l'ensemble constitué par la plaque, la membrane et la couronne à l'extrémité de la canalisation. Mais ceci n'est pas indispensable et l'on pourrait prévoir deux sortes de vis pour assurer séparément ces deux fonctions.

Pour mettre en oeuvre le dispositif d'obturation représenté sur les figures 1 à 5, on relie le volume 16 à une source de fluide sous pression par l'intermédiaire de la canalisation 20. La membrane souple 8 se déforme jusqu'à venir en appui sur les bords 6 de l'ouverture à obturer. L'avantage principal de ce dispositif est que la membrane souple est capable de se déformer beaucoup plus qu'un joint de type classique. Elle peut par conséquent compenser des variations de forme et de position beaucoup plus importantes.

On a décrit dans ce qui précède l'application du dispositif de l'invention à l'obturation d'une conduite avec ou sans bride de fixation. Il va de soi qu'il trouve de nombreuses autres applications: sas de zones contaminées, entrées d'une bulle d'hôpital de campagne, cloche de plongée pour travaux sousmarins, par exemple.

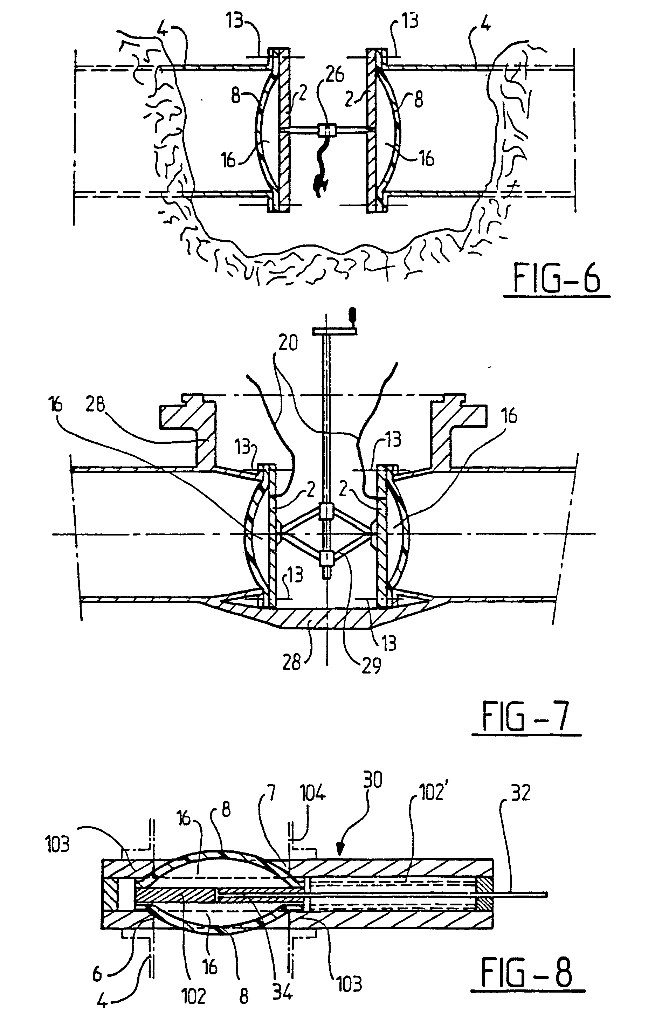

On a représenté sur les figures 6 et 7 deux autres applications du dispositif d'obturation. Celle de la figure 6 s'applique à l'obturation de chacune des ouvertures d'une conduite 4, dont on a découpé un tronçon; celle de la figure 7 à l'obturation provisoire de l'intérieur d'un corps de vanne 28. Deux ensembles distincts sont formés d'une plaque 2, d'une membrane et d'une couronne de serrage 10 serrée sur la plaque au moyen de vis 13. Un trou de communication 18 prévu dans chacune des plaques 2 permet de mettre les volumes 16 délimités par une plaque et la membrane correspondante en communication avec une source de fluide sous pression (non représentée). Ces deux applications se distinguent de celles des figures 1 à 5 par une réalisation différente des moyens pour maintenir les plaques 2 en regard des extrémités des canalisations. Les deux dispositifs sont montés en opposition et maintenus par un système mécanique qui assure leur application sur l'extrémité des canalisations 4. Sur la figure 6, ces moyens sont constitués par un vérin coulissant 26 qui assure simultanément la mise sous pression des volumes 16. Sur la figure 7, ils sont constitués par un cric 29, du genre cric de voiture. La mise sous pression des volumes 16 est réalisée séparément par l'intermédiaire des canalisations 20.

On a représenté sur la figure 8 une application du dispositif d'obturation à une vanne-tiroir. Cette vanne comporte un corps de vanne présentant deux parois parallèles 103 dans lesquelles sont formées des ouvertures 7 raccordées à des canalisations 104, situées de part et d'autre du corps de vanne. Le corps de vanne délimite un passage pour un fluide gazeux ou liquide. Un tiroir 102, qui constitue un élément d'obturation, peut être déplacé entre une position fermée représentée sur la figure 8, dans laquelle il obture le passage pour le fluide, et une position ouverte représentée en traits interrompus et désignée par la référence 102', dans laquelle il laisse libre le passage. Une tige de commande 32 permet de déplacer le tiroir entre sa position ouverte et sa position fermée. De plus, la tige 32 est creuse et elle est reliée à un canal 34 percé dans l'épaisseur du tiroir 102 et qui se sépare en deux canaux qui débouchent chacun dans l'un des volumes 16 afin de les relier à une source de pression unique.

On veut assurer une étanchéité entre chacune des membranes 8 et le bord 6. Ceci est obtenu, comme pour les modes de réalisation précédents, en déformant les membranes par application d'une pression jusqu'à ce qu'elles viennent en contact avec ces bords 6. La capacité de déformation des membranes permet d'accomoder un jeu entre le tiroir 102 et le rebord 6 ainsi qu'une imprécision de la position du tiroir.

Une vanne à tiroir de ce type s'applique par exemple à un sas de boîtes à gants.

## Revendications

1. Dispositif d'obturation d'une ouverture (7) limitée par un bord (6) comprenant un élément d'obturation rigide (2, 102), dont les dimensions sont supérieures à celles de l'ouverture (7) et dont la pourtour épouse au moins approximativement le bord de l'ouverture, des moyens pour assujettir ledit élément d'obturation en regard de l'ouverture, et des moyens pour assurer une étanchéité à un fluide entre l'élément d'obturation (2, 102) et le bord (6), caractérisé en ce que les moyens pour assurer une étanchéité entre l'élément d'obturation (2, 102) et le bord (6) sont constitués par une membrane souple (8) dont les dimensions sont également supérieures à celles de l'ouverture (7), par des moyens pour fixer le pourtour de cette membrane de manière étanche sur l'élément d'obturation (2, 102) de manière à délimiter un volume (16) entre la membrane (8) et l'élément d'obturation (2, 102) et par un trou de communication (18, 32) pratiqué dans l'élément d'obturation pour mettre le volume (16) en communication avec une source de fluide sous pression.

2. Dispositif d'obturation pour deux ouvertures (7) situées en regard l'une de l'autre, caractérisé en ce qu'il comporte deux dispositifs selon la revendication 1, les moyens pour maintenir chaque élément d'obturation en regard de l'ouverture (7) correspondante étant disposés entre les deux éléments d'obturation et exerçant sur chacun d'eux un effort qui l'applique sur le bord de l'ouverture en regard de laquelle il se trouve.

3. Dispositif d'obturation du genre vanne-tiroir pour deux ouvertures (7) situées en regard l'une de l'autre, caractérisé en ce qu'il comporte deux dispositifs selon la revendication 1, les ouvertures (7) étant formées dans deux parois (103) d'un corps (30) et délimitant une section de passage pour un fluide, les deux dispositifs comprenant un élément d'obturation commun constitué par un tiroir (102) guidé dans le corps (30), les deux membranes étant situées sur les faces en regard des ouvertures, des moyens étant prévus pour déplacer le tiroir (102) entre une position fermée dans laquelle il obture le passage pour le fluide et une position ouverte dans laquelle il n'obture pas ce passage, et un canal de communication (32) percé dans l'épaisseur du tiroir (102) étant relié aux trous de communication des deux dispositifs.

4. Dispositif selon l'une des revendications 1 à 3, caractérisé en ce que les moyens pour fixer le pourtour d'une membrane (8) sur un élément d'obturation (2, 102) sont constitués par une couronne (10) serrée sur l'élément d'obturation, la membrane (8) étant pincée entre l'élément d'obturation et la couronne.

5. Dispositif selon la revendication 4, caractérisé en ce que la couronne (10) comporte des cordons (10a) qui pénètrent dans des rainures annulaires (2a) pratiquées dans la plaque (2) pour pincer plus efficacement la membrane (8).

6. Dispositif selon la revendication 4, caractérisé en ce que la couronne (10) comporte un rebord (10b) qui s'engage dans un décrochement correspondant (2b) de l'élément d'obturation (2, 102) afin de pincer plus efficacement la membrane (8).

7. Dispositif selon l'une quelconque des revendications 1 et 4 à 6, caractérisé en ce que les moyens pour assujettir l'élément d'obturation (2) en regard de l'ouverture (7) sont constitués par des pattes de fixation (24) fixées sur l'élément d'obturation (2), une bride (14) ou un collier rapporté (22) fixé à proximité du bord (6) étant pris(e) entre l'élément d'obturation (2) et les pattes de fixation (24).

## Patentansprüche

1. Vorrichtung zum Verschließen einer von einer Wand (6) begrenzten Öffnung (7), mit einem festen Verschlußelement (2, 102), das größer als die Öffnung (7) ist und dessen äußere Umfangslinie mindestens ungefähr an die Wand der Öffnung anschließt, Mitteln zum Befestigen des Verschlußelements bezüglich der Öffnung und Mitteln zum fluiddichten Verschließen des Verschlußelements (2, 102) mit der Wand (6), dadurch gekennzeichnet, daß die Mittel zum fluiddichten Verschließen des Verschlußelements (2, 102) mit der Wand (6) eine flexible Membran (8), die ebenfalls größer als die Öffung (7) ist, Mittel zum dichten Befestigen des Randes der Membran an dem Verschlußelement (2, 102) derart, daß ein Raum (16) zwischen der Membran (8) und dem Verschlußelement (2, 102) festgelegt wird, und eine Verbindungsöffnung (18, 32) in dem Verschlußelement zum Verbinden des Raumes (16) mit einer Quelle eines unter Druck stehenden Fluids umfassen.

2. Vorrichtung zum Verschließen zweier, einander gegenüberliegender Öffnungen (7), dadurch gekennzeichnet, daß sie zwei Vorrichtungen nach Anspruch 1 umfaßt, wobei die Mittel zum Halten eines jeden Verschlußelements bezüglich der entsprechenden Öffnung (7) zwischen den beiden Verschlußelementen angeordnet sind und auf die Wand der jeweils anderen Öffnung Druck ausüben.

3. Vorrichtung der Zieh-Schiebe-Bauart zum Verschließen zweier, einander gegenüberliegende Öffnungen (7), dadurch gekennzeichnet, daß sie zwei Vorrichtungen nach Anspruch 1 umfaßt, wobei die Öffnungen (7) in zwei Wandungen (103) eines Rumpfes (30) ausgebildet sind und einen Kanalabschnitt für ein Fluid bilden, die beiden Vorrichtungen ein gemeinsames Verschlußelement aufweisen, das einen in dem Rumpf (30) geführten Schieber (102) umfaßt, die beiden Membranen quer zu den Öffnungen angeordnet sind, Mittel zum Hin- und Herbewegen des Schiebers (102) zwischen einer geschlossenen Position, in welcher er den Fluidfluß unterbindet, und einer geöffneten Position, in welcher er den Fluidfluß nicht unterbindet, vorgesehen sind und ein die Dicke des Schiebers (102) durchstoßender Verbindungskanal (32) mit den Verbindungsöffnungen der beiden Vorrichtungen verbunden ist.

4. Vorrichtung nach einem der Ansprüche 1 bis 3, dadurch gekennzeichnet, daß die Mittel zum Befestigen des Randes der Membran (8) an dem Verschlußelement (2, 102) von einer auf das Verschlußelement auf gepreßten Einfassung (10) gebildet sind, wobei die Membran (8) zwischen dem Verschlußelement und der Einfassung eingeklemmt ist.

5. Vorrichtung nach Anspruch 4, dadurch gekennzeichnet, daß die Einfassung (10) Ansätze (10a) aufweist, die in Ringnuten (2a) auf dem Verschusselement (2) eingreifen, um die Membran (8) wirkungsvoller einzuklemmen.

6. Vorrichtung nach Anspruch 4, dadurch gekennzeichnet, daß die Einfassung (10) einen Ansatz (10b) aufweist, der in einen entsprechenden Absatz (2b) des Verschlußelements (2, 102) eingreift, um die Membran (8) wirkungsvoller einzuklemmen.

7. Vorrichtung nach einem der Ansprüche 1 und 4 bis 6, dadurch gekennzeichnet, daß die Mittel zum Befestigen des Verschlußelements (2) bezüglich der Öffnung (7) von an dem Verschlußelement (2) angebrachten Befestigungsanschlägen (24) gebildet sind, wobei ein Flansch (14) oder eine aufgesetzte, in der Nähe der Wand (6) befestigten Schelle (22) zwischen dem Verschlußelement (2) und den Befestigungsanschlägen (24) angeordnet ist.

**Claims**

1. Device for covering an opening (7) limited by an edge (6) comprising a rigid covering member (2, 102), whereof the dimensions are greater than those of the opening (7) and whereof the periphery follows at least approximately the edge of the opening, means for fastening the said covering member opposite the opening and means for ensuring fluid-tightness between the covering member (2, 102) and the edge (6), characterised in that the means for ensuring tightness between the covering member (2, 102) and the edge (6) are constituted by a flexible membrane (8), whereof the dimensions are also greater than those of the opening (7), by means for fixing the periphery of this membrane in a tight manner to the covering member (2, 102) so as to define a space (16) between the membrane (8) and the covering member (2, 102) and by a connecting hole (18, 32) provided in the covering member in order to connect the space (16) to a source of fluid under pressure.

2. Covering device for two openings (7) situated opposite each other, characterised in that it comprises two devices according to Claim 1, the means for keeping each covering member opposite the corresponding opening (7) being disposed between the two covering members and exerting on each of the latter a force which presses it against the edge of the opening opposite which it is located.

3. Covering device of the sliding valve type for two openings (7) situated opposite one another, characterised in that it comprises two devices according to Claim 1, the openings (7) being formed in two walls (103) of a body (30) and defining a section of passage for a fluid, the two devices comprising a common covering member constituted by a slide (102) guided in the body (30), the two membranes being situated on opposing faces of the openings, means being provided for moving the slide (102) between a closed position in which it covers the passage for the fluid and an open position in which it does not cover this passage and a communication channel (32) provided in the thickness of the slide (102) being connected to holes for connecting the two devices.

4. Device according to anyone of Claims 1 to 3, characterised in that the means for fixing the periphery of a membrane (8) on a covering member (2, 102) are constituted by a ring (10) clamped on the covering member, the membrane (8) being gripped between the covering member and the ring.

5. Device according to Claim 4, characterised in that the ring (10) comprises beads (10a) which penetrate in annular grooves (2a) provided in the covering member (2) in order to grip the membrane (8) more effectively.

6. Device according to Claim 4, characterised in that the ring (10) comprises a rim (10a) which engages in a corresponding recess (2b) in the covering member (2, 102) in order to grip the membrane (8) more effectively.

7. Device according to any one of Claims 1 and 4 to 6, characterised in that the means for fastening the covering member (2) opposite the opening (7) are constituted by fixing lugs (24) fixed to the covering member (2), a flange (14) or an attached collar (22) fixed in the vicinity of the edge (6) being engaged between the covering member (2) and the fixing lugs (24).

FIG-1

FIG-3

FIG-2

FIG-4

FIG-5

FIG-6

FIG-7

FIG-8